# EUROPEAN PATENT APPLICATION

(11) **EP 3 822 571 A1**
(43) Date of publication of application: **19.05.2021**
(21) Application number: 20207313.6
(22) Date of filing: 12.11.2020
(51) Int. Cl.: F28F 9/013, F02C 7/141, F28D 1/03, F28D 1/04, F28D 1/053, F28D 7/00, F28D 7/16, F28F 9/00, F28D 1/02, F28D 21/00, F28F 1/02, F28F 1/26, F28F 9/02, F28F 9/18, F28F 9/26, F28F 21/08

(54) **AIRCRAFT HEAT EXCHANGER ASSEMBLY**

(30) Priority: 15.11.2019 US 201916685483
(71) Applicant: Raytheon Technologies Corporation, Farmington, CT 06032 (US)
(72) Inventor: DISORI, Michael A., Glastonbury, CT 06033 (US); STILLMAN, William P., Boulder, CO 80303 (US); HYLAND, David J., Portland, CT 06480 (US); STYBORSKI, Jeremy A., East Hartford, CT 06118 (US); SHAUGHNESSY, Kyle F., Manchester, CT 06040 (US); BROULIDAKIS, Alexander G., Tolland, CT 06084 (US); LEES, Alan D., Vernon, CT 06066 (US); CHAPDELAINE, David Donald, Ellington, CT 06029 (US)
(74) Representative: Dehns

(57) **Abstract**

A heat exchanger (20) has: an inlet manifold (22) having an inlet port (26); and an outlet manifold (24) having an outlet port (28). A first gas flowpath (600) passes from the inlet port (26) to the outlet port (28). A plurality of plate banks (30) are positioned end-to-end, each plate bank having a plurality of conduits with interiors along respective branches of the first gas flowpath (600), a second gas flowpath (602) extending across exteriors of the plurality of conduits. One or more docks (50) couple adjacent ends of the plurality of plate banks (30).

## Description

### BACKGROUND

The disclosure relates to gas turbine engine heat exchangers. More particularly, the disclosure relates to air-to-air heat exchangers.

Examples of gas turbine engine heat exchangers are found in: United States Patent Application Publication 20190170445A1 (the '445 publication), McCaffrey, June 6, 2019, "HIGH TEMPERATURE PLATE FIN HEAT EXCHANGER"; United States Patent Application Publication 20190170455A1 (the '455 publication), McCaffrey, June 6, 2019, "HEAT EXCHANGER BELL MOUTH INLET"; and United States Patent Application Publication 20190212074A1 (the '074 publication), Lockwood et al., July 11, 2019, "METHOD FOR MANUFACTURING A CURVED HEAT EXCHANGER USING WEDGE SHAPED SEGMENTS", the disclosures of which three publications are incorporated by reference in their entireties herein as if set forth at length.

An exemplary positioning of such a heat exchanger provides for the transfer heat from a flow (heat donor flow) diverted from an engine core flow to a bypass flow (heat recipient flow). For example, air is often diverted from the compressor for purposes such as cooling. However, the act of compression heats the air and reduces its cooling effectiveness. Accordingly, the diverted air may be cooled in the heat exchanger to render it more suitable for cooling or other purposes. One particular example draws the heat donor airflow from a diffuser case downstream of the last compressor stage upstream of the combustor. This donor flow transfers heat to a recipient flow which is a portion of the bypass flow. To this end, the heat exchanger may be positioned within a fan duct or other bypass duct. The cooled donor flow is then returned to the engine core (e.g., radially inward through struts) to pass radially inward of the gas path and then be passed rearward for turbine section cooling including the cooling of turbine blades and vanes.

### SUMMARY

One aspect of the invention involves a heat exchanger comprising: an inlet manifold having an inlet port; and an outlet manifold having an outlet port. A first gas flowpath passes from the inlet port to the outlet port. A plurality of plate banks are positioned end-to-end, each plate bank having a plurality of conduits with interiors along respective branches of the first gas flowpath, a second gas flowpath extending across exteriors of the plurality of conduits. One or more docks couple adjacent ends of the plurality of plate banks.

A further embodiment of any of the foregoing embodiments may additionally and/or alternatively include each plate bank being brazed to at least one dock of the one or more docks.

A further embodiment of any of the foregoing embodiments may additionally and/or alternatively include each plate bank comprising the associated plurality of conduits each being obround in transverse cross-section; and fins on the exterior of the conduits.

A further embodiment of any of the foregoing embodiments may additionally and/or alternatively include each plate bank comprising the associated plurality of conduits each being an individual casting.

A further embodiment of any of the foregoing embodiments may additionally and/or alternatively include each of the one or more castings being of a nickel-based alloy.

A further embodiment of any of the foregoing embodiments may additionally and/or alternatively include each of the one or more castings having a first face and a second face. The first face and the second face respectively bear first fins and second fins. Adjacent castings interdigitate first fins and second fins with the second fins of one casting interdigitating with the first fins of the casting, if any, to the second side thereof.

A further embodiment of any of the foregoing embodiments may additionally and/or alternatively include each dock comprising: a first face having a plurality of sockets respectively receiving conduits of a first adjacent said plate bank; and a second face having a plurality of sockets respectively receiving conduits of a second adjacent said plate bank.

A further embodiment of any of the foregoing embodiments may additionally and/or alternatively include the plurality of sockets of the first face and the plurality of sockets of the second face each being obround in socket footprint.

A further embodiment of any of the foregoing embodiments may additionally and/or alternatively include at least one of the one or more docks coupling its associated plate banks off-parallel to each other.

A further embodiment of any of the foregoing embodiments may additionally and/or alternatively include at least one of the one or more docks coupling its associated plate banks off-parallel to each other by 5.0° to 20°.

A further embodiment of any of the foregoing embodiments may additionally and/or alternatively include each of the one or more docks being an individual casting.

A further embodiment of any of the foregoing embodiments may additionally and/or alternatively include at least one of the one or more docks bearing means for mounting the heat exchanger to environmental structure.

A further embodiment of any of the foregoing embodiments may additionally and/or alternatively include the means for mounting comprising an apertured mounting ear.

A further embodiment of any of the foregoing embodiments may additionally and/or alternatively include a turbine engine including the heat exchanger and further comprising: a core flowpath, the first gas flowpath being a diversion from the core flowpath; and a bypass flowpath, the second flowpath being a portion of the bypass flowpath.

A further embodiment of any of the foregoing embodiments may additionally and/or alternatively include the turbine engine further comprising a case, wherein a mounting feature on the dock is mounted to the case.

A further embodiment of any of the foregoing embodiments may additionally and/or alternatively include the first flowpath being diverted from downstream of a compressor of the engine.

A further embodiment of any of the foregoing embodiments may additionally and/or alternatively include a method for manufacturing the heat exchanger. The method comprising: casting the dock, the plurality of plate banks, the inlet manifold, and the outlet manifold; and securing the dock, the plurality of plate banks, the inlet manifold, and the outlet manifold to each other.

A further embodiment of any of the foregoing embodiments may additionally and/or alternatively include the securing comprising brazing.

A further embodiment of any of the foregoing embodiments may additionally and/or alternatively include a method for using the heat exchanger. The method comprising: passing a first gas flow along the first flowpath; and passing a second gas flow along the second flowpath, the second flow receiving heat from the first flow.

A further embodiment of any of the foregoing embodiments may additionally and/or alternatively include: the first flow being a diversion of a core flow of a turbine engine; and the second flow being a portion of a bypass flow of the turbine engine.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a first view of a heat exchanger.
FIG. 2 is a second view of the heat exchanger.
FIG. 3 is an exploded view of the heat exchanger.
FIG. 4 is a cross-sectional view of the heat exchanger taken along line 4-4 of FIG. 2.
FIG. 4A is an enlarged view of an inlet manifold downstream end of the heat exchanger of FIG. 4.
FIG. 4B is an enlarged view of a dock of the heat exchanger of FIG. 4.
FIG. 4C is an enlarged view of an outlet manifold upstream end of the heat exchanger of FIG. 4.
FIG. 5 is a plan view of the dock of the heat exchanger.
FIG. 6 is a sectional view of an alternate heat exchanger having an angled dock.
FIG. 7 is a partially schematic half view of an engine with heat exchanger.

Like reference numbers and designations in the various drawings indicate like elements.

### DETAILED DESCRIPTION

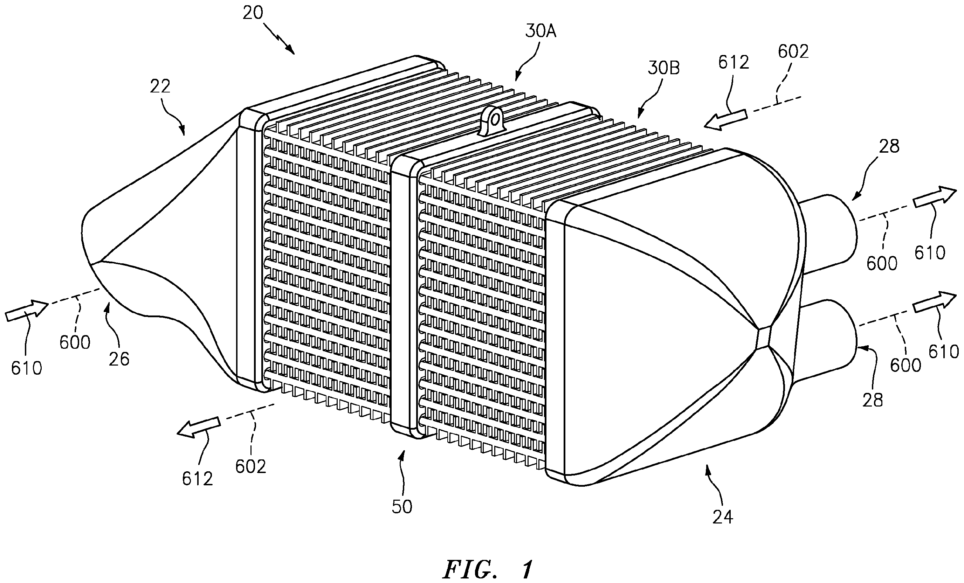

FIG. 1 shows a heat exchanger 20 providing heat exchange between a first flowpath 600 and a second flowpath 602. In the exemplary embodiment, the flowpaths are gas flowpaths passing respective first and second gas (e.g., air) flows 610 and 612.

The heat exchanger 20 comprises an inlet manifold 22 and an outlet manifold 24. Along the first flowpath 600, the inlet manifold 22 has one or more inlets (inlet ports) 26 (e.g., a single fitting shown in the example). The outlet manifold 24 similarly has one or more outlets (outlet ports) 28 (e.g., two outlet fittings shown in the example).

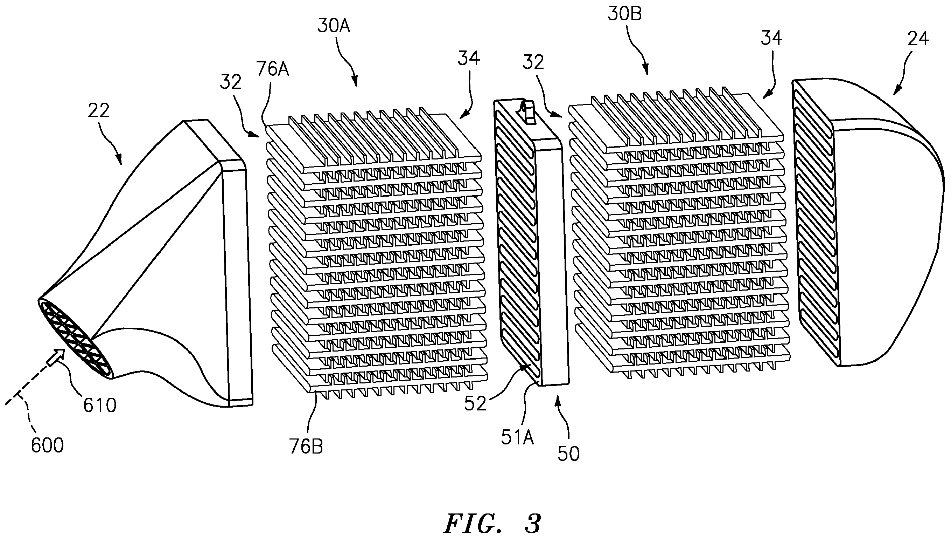

As is discussed further below, the heat exchanger 20 has a plurality of plate banks (two plate banks 30A, 30B shown in the example). Along the first flowpath 600 (FIG. 3), each plate bank extends from an upstream first end 32 to a downstream second end 34.

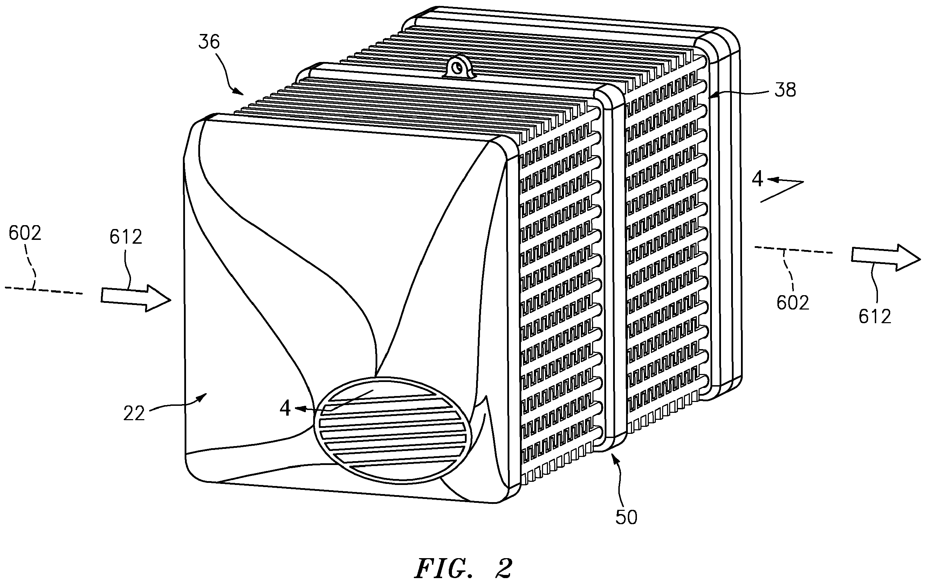

The plate banks, along the second flowpath 602, extend from an upstream end 36 (FIG. 2) to a downstream end 38. As is discussed further below, the exemplary plate banks are positioned end-to-end along the first flowpath 600. One or more docks 50 (FIG. 3) each couple adjacent ends of adjacent plate banks.

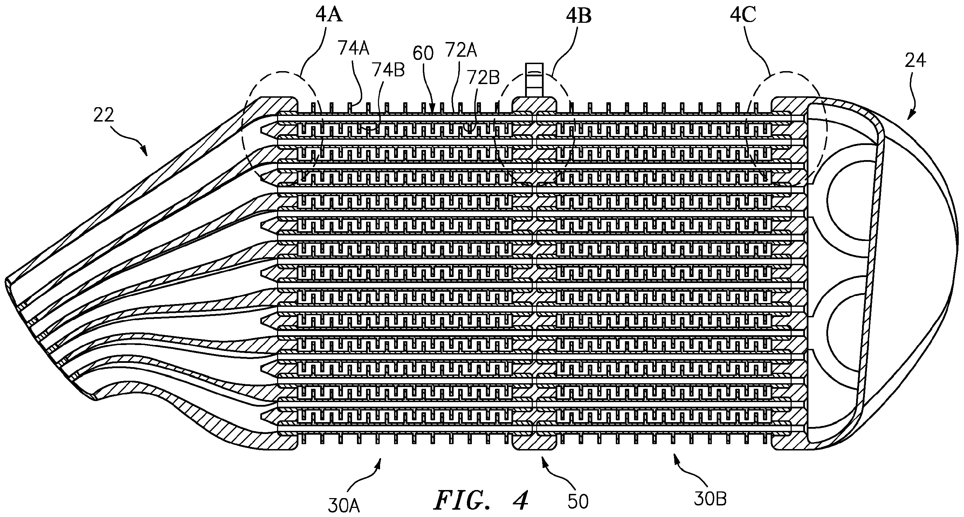

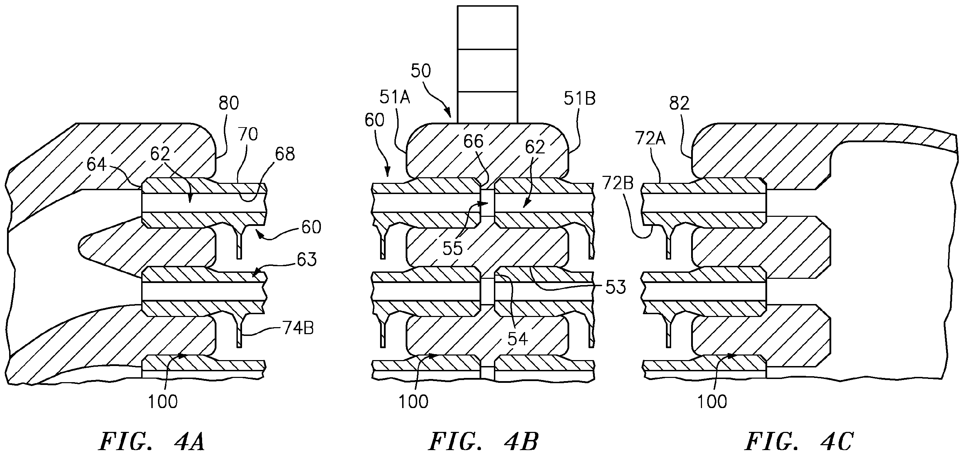

Each of the example plate banks 30A, 30B has a plurality of conduits with interiors along respective branches of the first flowpath 600. In the example plate banks, each conduit is formed by a single separately-formed plate 60 (FIG. 4). In the example plate banks, the banks are formed by a linear array of individual plates as if a stack (but not directly contacting each other). Alternative plate banks may include integral groups (e.g., unitarily cast) of plates. Although in the example plate banks, the plates are only mechanically interconnected via the mating dock(s) and, if a terminal bank, the associated manifold, there are other configurations where the plates may have direct contact (e.g., as in a true stack) and/or direct or other indirect coupling of plates within a given bank.

FIGs. 4A-4C show each plate 60 as having an interior 62 along the respective branch of the first flowpath 600. Each plate 60 and a main body portion 63 thereof extends from an upstream end 64 to a downstream end 66 and has an interior surface 68 and an exterior surface 70. Each plate 60 and exterior surface 70 has a first face 72A and a second face 72B. The exterior surface 70 bears heat transfer fins 74A, 74B (FIG. 4) along the first and second faces 72A, 72B, respectively. The fins 74A, 74B are out of phase with each other so that the adjacent plates interdigitate first fins and second fins with the second fins of one plate interdigitating with the first fins of the plate, if any, to the second side thereof. The plates also have respective first and second edges 76A, 76B (FIG. 3).

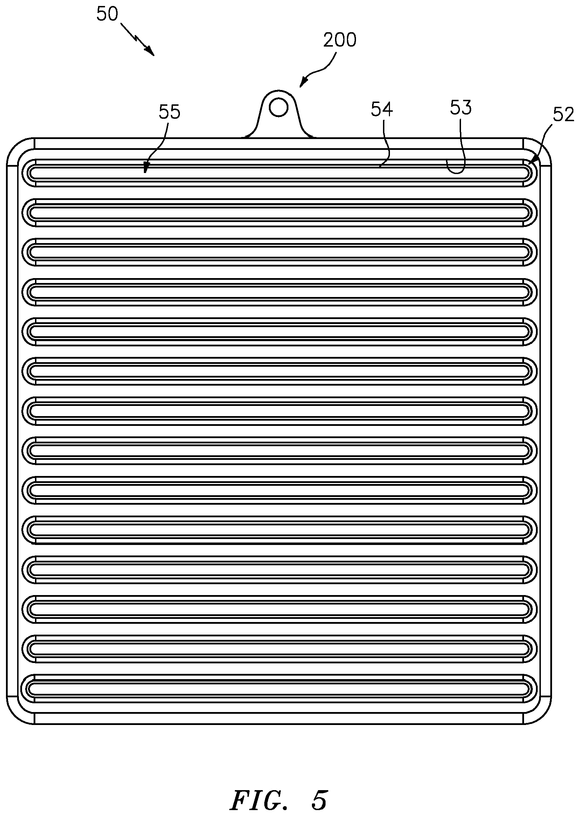

The docks 50 each have a first face 51A and a second face 51B (FIG. 4B). Along each of the first and second faces, the dock has a plurality of sockets 52 (FIG. 3). Exemplary sockets 52 are obround in planform/footprint (e.g., two straight sides and two arcuate (e.g., semicircular) ends). The exemplary sockets 52 have a sidewall 53 (FIG. 5) and a base 54. The base 54 is formed by a shoulder. Each socket on the first face 51A is aligned with a corresponding socket on the second face 51B with an aperture 55 joining the respective bases 54. FIG. 4B shows adjacent end portions of adjacent plates of the two banks in the adjacent sockets. The manifolds 22, 24 have faces 80 (FIG. 4A) and 82 (FIG. 4C) each with a similar array of sockets receiving the opposite end portions of the two plate banks. In an exemplary two-bank implementation, both banks are terminal banks. In an alternative implementation with three or more banks, there would be one fewer docks than banks and the two terminal banks would mount to the manifolds.

Exemplary materials for the manifolds, plate banks, and dock(s) are alloys. Exemplary alloys are nickel-based superalloys. Exemplary component manufacture is casting. Alternative manufacture is additive manufacture (e.g., selective laser sintering or direct metal laser sintering). Finish machining (e.g., milling and/or abrasive grinding) may true up mating surfaces. Particularly for the dock, a pure machining (e.g., from billet or thick plate stock) is possible. An exemplary nickel-based superalloy is the Mar-M family such as Mar-M-247, (nominal weight percent composition: Al 5.4 - 5.7; Cr 8.0 - 8.5; Mn 0.10; Si 0.25; W 9.3 - 9.7; C 0.00 - 0.09; Co 9.0-9.5; Ni, balance, with minor amounts, if any Ta, Ti, Hf, plus impurities, if any). More broadly, the nickel-based superalloys may have nickel as a largest individual by weight and/or atomic elemental content, typically at least 45% by weight, often in the range of 50% to 75% by weight). Exemplary assembly techniques include brazing and diffusion bonding. FIGs. 4A-C show respective joints 100 formed as brazes or diffusion bonds.

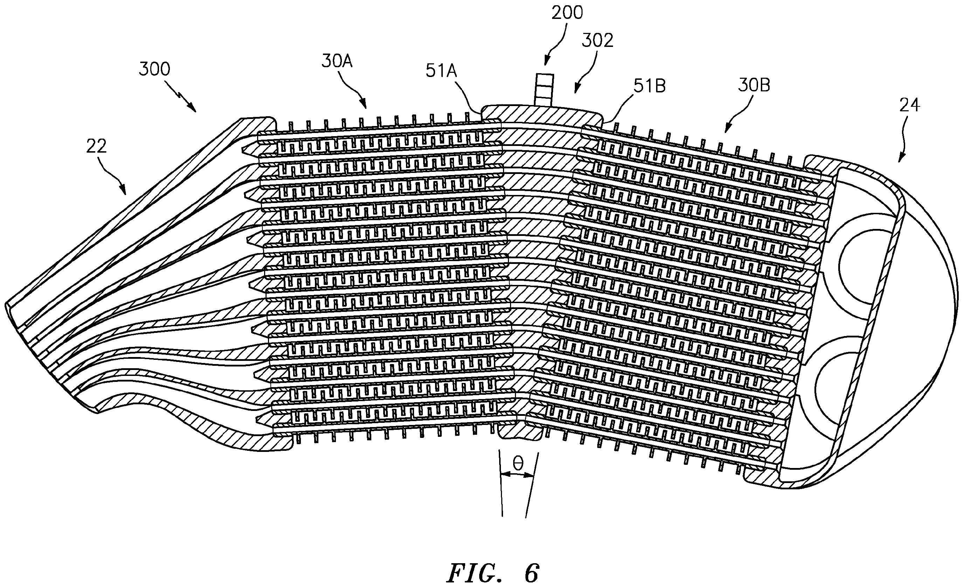

Among further variations are angling the plate banks off parallel to each other. FIG. 6 shows a heat exchanger 300 which may be otherwise similar to the heat exchanger 20 except that the dock 302 has faces 51A, 51B off-parallel by an angle θ. An exemplary angle θ is at least 5° (e.g. 5° to 20°). An alternative variation (not shown) retains the faces 51A, 51B parallel but angles the sockets of one or both sides off-perpendicular to the associated face. In such a variation, the bank could form a non-right parallelepiped (vs. the generally right parallelepiped banks of FIGs. 1-6).

Among further variations are integration of one or more of several types of features with the dock. These may include mounting features for mounting the heat exchanger to environmental structure and/or mounting features for mounting additional components to the heat exchanger. FIG. 5 shows one such exemplary mounting feature 200 as an apertured mounting ear (the aperture may receive a bolt, screw, hook, clevis pin, or the like). Alternative mounting features include, without limitation, clevises, bosses (e.g., threaded) bearing eyelets, and the like.

Among further variations are differing mating arrangements between the blocks and the dock and/or the manifolds. For example, alternative load-bearing joints to the exemplary braze or diffusion bond include dovetail arrangements. In an exemplary dovetail arrangement (not shown) the plate ends form dovetail projections and the dock sockets form complementary dovetail slots. One end of each slot may be open at least initially and then closed. In one group of examples, this is merely an assembly aid. For example, the plates may be slid into place wherein the dovetail arrangement holds them in position. Thereafter, they may be brazed or bonded. In other variations, reverse extraction of the plates may be blocked such as by attaching a removable edge portion of the dock which closes the ends of the dovetail slots.

In yet other variations of mating arrangements, alternatively or in addition to the braze or bond, there may be a tying arrangement (not shown - e.g., tie rods engaging features on the manifolds 22 and 24) to hold the plate banks and dock compressed between the manifolds.

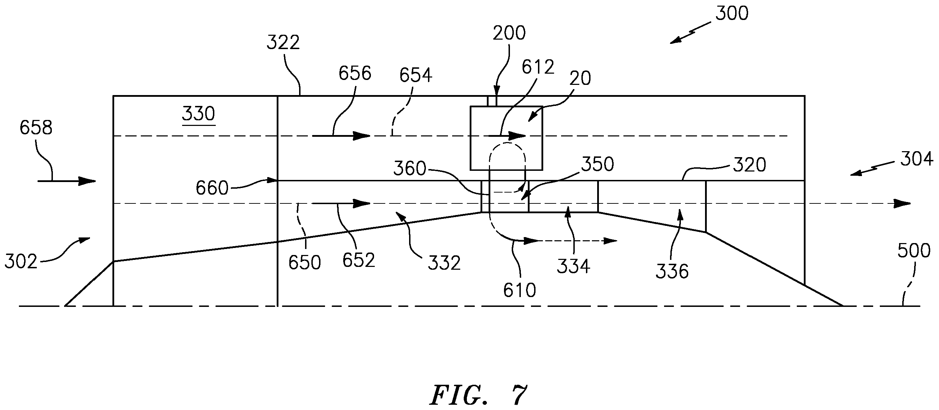

FIG. 7 schematically shows a gas turbine engine 300 as a turbofan engine having a centerline or central longitudinal axis 500 and extending from an upstream end at an inlet 302 to a downstream end at an outlet 304. The exemplary engine schematically includes a core flowpath 650 passing a core flow 652 and a bypass flowpath 654 passing a bypass flow 656. The core flow and bypass flow are initially formed by respective portions of a combined inlet airflow 658 divided at a splitter 660.

A core case or other structure 320 divides the core flowpath 650 from the bypass flowpath 654. The bypass flowpath 654 is, in turn, surrounded by an outer case 322 which, depending upon implementation, may be a fan case. From upstream to downstream, the engine includes a fan section 330 having one or more fan blade stages, a compressor 332 having one or more sections each having one or more blade stages, a combustor 334 (e.g., annular, can-type, or reverse flow), and a turbine 336 again having one or more sections each having one or more blade stages. For example, many so-called two-spool engines have two compressor sections and two turbine sections with each turbine section driving a respective associated compressor section and a lower pressure downstream turbine section also driving the fan (optionally via a gear reduction). Yet other arrangements are possible.

FIG. 7 shows the heat exchanger 20 positioned in the bypass flowpath 654 so that a portion of the bypass flowpath 654 becomes the second flowpath 602 and a portion of the bypass flow 656 becomes the second airflow 612.

The exemplary first airflow 610 is drawn from a diffuser case 350 between the compressor 332 and combustor 334 and returned radially inwardly back through the core flowpath 650 via struts 360.

FIG. 7 also schematically shows the mounting feature 200 mounting the heat exchanger. An exemplary mounting is to the outer case 322 via a bolt (not shown) passing through the feature 200 and a complementary feature (not-shown - e.g., a single eyelet or clevis) of the case 322. Alternative mounting features may be implemented along the core case 320.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline engine or baseline heat exchanger configuration, details of such baseline may influence details of particular implementations. Accordingly, other embodiments are within the scope of the following claims.

## Claims

1. A heat exchanger (20) comprising:
an inlet manifold (22) having an inlet port (26);
an outlet manifold (24) having an outlet port (28), a first gas flowpath (600) passing from the inlet port (26) to the outlet port (28);
a plurality of plate banks (30) positioned end-to-end, each plate bank (30) having a plurality of conduits with interiors along respective branches of the first gas flowpath (600), a second gas flowpath (602) extending across exteriors of the plurality of conduits; and
one or more docks (50) coupling adjacent ends of the plurality of plate banks (30).

2. The heat exchanger (20) of claim 1, wherein each plate bank (30) is brazed to at least one dock of the one or more docks (50).

3. The heat exchanger (20) of claim 1 or 2, wherein each plate bank (30) comprises:
the associated plurality of conduits each being obround in transverse cross-section; and fins on the exterior of the conduits.

4. The heat exchanger (20) of claim 1, 2 or 3, wherein each plate bank (30) comprises:
the associated plurality of conduits each being an individual casting, wherein each of the one or more castings is optionally of a nickel-based alloy.

5. The heat exchanger (20) of claim 4, wherein:
each of the one or more castings has a first face and a second face;
the first face and the second face respectively bear first fins and second fins; and
adjacent castings interdigitate first fins and second fins with the second fins of one casting interdigitating with the first fins of the casting, if any, to the second side thereof.

6. The heat exchanger (20) of any preceding claim, wherein each dock (50) comprises:
a first face (51A) having a plurality of sockets (52) respectively receiving conduits of a first adjacent said plate bank; and
a second face (51B) having a plurality of sockets (52) respectively receiving conduits of a second adjacent said plate bank.

7. The heat exchanger (20) of claim 6 wherein:
the plurality of sockets (52) of the first face (51A) and the plurality of sockets (52) of the second face (51B) are each obround in socket footprint.

8. The heat exchanger (20) of any preceding claim, wherein:
at least one of the one or more docks (50) couples its associated plate banks (30) off-parallel to each other, wherein at least one of the one or more docks (50) optionally couples its associated plate banks (30) off-parallel to each other by 5.0° to 20°.

9. The heat exchanger (20) of any preceding claim, wherein:
each of the one or more docks (50) is an individual casting.

10. The heat exchanger (20) of any preceding claim, wherein:
at least one of the one or more docks (50) bears means for mounting the heat exchanger (20) to environmental structure, wherein:
the means for mounting optionally comprises an apertured mounting ear (200).

11. A turbine engine (300) including the heat exchanger (20) of any preceding claim, and further comprising:
a core flowpath (650), the first gas flowpath (600) being a diversion from the core flowpath (650); and
a bypass flowpath (654), the second flowpath (602) being a portion of the bypass flowpath (654).

12. The turbine engine (300) of claim 11 further comprising a case (322) and wherein:
a mounting feature (200) on the dock (50) is mounted to the case (322).

13. The turbine engine (300) of claim 11 or 12 wherein:
the first flowpath (600) is diverted from downstream of a compressor (332) of the engine (300).

14. A method for manufacturing the heat exchanger (20) of any of claims 1-10, the method comprising:
casting the dock (50), the plurality of plate banks (30), the inlet manifold (22), and the outlet manifold (24); and
securing the dock (50), the plurality of plate banks (30), the inlet manifold (22), and the outlet manifold (24) to each other, wherein the securing optionally comprises brazing.

15. A method for using the heat exchanger (20) of any of claims 1-10, the method comprising:
passing a first gas flow (610) along the first flowpath (600); and
passing a second gas flow (612) along the second flowpath (602), the second flow (612) receiving heat from the first flow (610), wherein optionally:
the first flow (610) is a diversion of a core flow (652) of a turbine engine (300); and
the second flow (612) is a portion of a bypass flow (656) of the turbine engine (300).
